(19) 

Europäisches
Patentamt
European
Patent Office
Office européen
des brevets

(11) **EP 2 273 496 A1**

(12) **EUROPEAN PATENT APPLICATION**

(43) Date of publication:
**12.01.2011 Bulletin 2011/02**

(51) Int Cl.:
*G11B 7/0065* (2006.01)     *G11B 7/007* (2006.01)

(21) Application number: **09305591.1**

(22) Date of filing: **24.06.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Thomson Licensing
92130 Issy-les-Moulineaux (FR)**

(72) Inventor: **Malki, Oliver
78176 Fuetzen (DE)**

(74) Representative: **Schmidt-Uhlig, Thomas
Deutsche Thomson OHG
European Patent Operations
Karl-Wiechert-Allee 74
30625 Hannover (DE)**

(54) **Method for retrieving synchronization marks**

(57)     Method for retrieving synchronization marks (4, 6, 8) from a holographic data page, comprising the steps of:
- Determining a position of at least a first synchronization mark (4) that is assigned to a first level,
- Determining a position of one or more synchronization marks assigned to a second level (6, 8) that is lower in hierarchy compared to the first level, wherein the determination is based on the position of the at least one first synchronization mark (4) and a known spatial alignment of the synchronization marks (4, 6, 8) relative to each other.

Fig. 1

**Description**

Technical field of the invention

The present invention relates to a method for retrieving synchronization marks from a holographic data page, to an apparatus for writing to and/or reading from a holographic storage medium and to a holographic storage medium having at least one data page comprising synchronization marks.

In holographic data storage, digital data is stored by recording the interference pattern produced by the superposition of two coherent laser beams. Where one laser beam, the so called "object beam", is modulated by a spatial light modulator (SLM) and carries the information/data to be recorded, the second laser beam serves as a reference beam.

In contrast to conventional storage technologies, in holographic data storage data is stored in the volume of the storage medium instead of the surface and offers an increased data capacity and a higher data transfer rate. This is due to the fact data is stored as pages instead of storing single bits in conventional media such as CD or DVD. Typically, the object beam is modulated by the SLM with a two dimensional binary array or an array of grey values that code multiple bits. The modulated object beam interferes with the reference beam to form an interference pattern which is totally or partly placed in the holographic storage material. The interference pattern leads to a modification of specific properties of the storage material, which will depend on the local intensity of the interference pattern. In the following, the modified volume of the storage material storing the information imprinted to the object beam by the SLM is referred to as a data page, i.e. the data page is the data hologram stored in the holographic storage medium.

The read out process of a recorded hologram is performed by illuminating the data page with the reference beam, using essentially the same optical conditions as during recording. The result is a reconstruction of the recorded object beam, the so called reconstructed object beam that is detected by a detector array. The image of the reconstructed object beam detected by the detector array will be referred to as a detected image.

Holographic data storage allows achieving an increased data rate in addition to the increased data storage density. While conventional optical storage media use a single or a few two dimensional layers for data storage, a holographic data storage system uses the volume of a storage material for storing data pages. When reconstructing the object beam, a whole data page instead of a single bit is read out by the detector array.

In a holographic data storage system, the alignment of the different optical components, especially the SLM, the storage material and the detector, is of particular importance. The alignment is somehow critical, because over time, the different optical components may become misaligned, e.g. due to temperature change, mechanical vibration or by simple exchange of the storage medium. Further misalignment is caused by the movement of the storage medium. In order to assure an appropriate data readout, registration marks also referred to as synchronization marks are spread over the entire data page. Using these synchronization marks, data fields are localized, evaluated and the stored data is retrieved. For example, a group of data blocks is located within a grid of four synchronization marks marks. The first step of the data readout process is to identify and localize the synchronization marks in the detected image. Successful synchronization mark detection is essential for any successful demodulation of data. Due to correct synchronization mark detection a possible image distortion may be corrected.

In order to identify the position of the synchronization marks, it is known to calculate a cross correlation function between a predefined pattern used for the synchronization mark and the entire detected image. However, this leads to a huge numerical effort due to the large number of synchronization marks.

US 7116626 discloses a holographic storage system including a spatial light modulator (SLM), a detector, a storage medium and at least one micro-actuator. Various methods for determining the component misalignment of a holographic storage system via synchronization marks are presented.

Accordingly, it is an object of the present invention to provide a method for retrieving synchronization marks, a holographic storage medium and an apparatus for writing to and/or reading from a holographic storage medium.

The object is achieved by the subject matter of the independent claims; advantageous refinements of the invention are subject matter of the dependent claims.

With the object in view, a method for retrieving synchronization marks from a holographic data page is provided, comprising in the steps of:

- Determining a position of at least a first synchronization mark that is assigned to a first level,
- Determining a position of one or more synchronization marks assigned to a second level that is lower in hierarchy compared to the first level, wherein the determination is based on the position of the at least one first synchronization mark and a known spatial alignment of the synchronization marks relative to each other.

In the following the frequently used term: "synchronization mark" will be abbreviated a "sync mark"; the term: "synchronization mark that is assigned to a first level" will be referred to as a "first level sync mark", accordingly a "synchronization mark that is assigned to a second or further level" will be referred to as a "second or further level sync mark".

The concept of the method according to the invention is based on the following considerations:

A successful localization of sync marks is necessary for subsequent successful decoding of data. For calculating a cross correlation function between the detected image and a predefined pattern used for the sync marks, a huge numerical effort is necessary. Accordingly, a powerful and cost-intensive numerical processing unit is necessary to achieve an appropriate data readout rate.

It is a gist of the present invention to provide sync marks that are assigned to a plurality of hierarchically ordered levels and to implement a cascaded sync mark detection procedure. Further, the sync marks have a known spatial alignment relative to each other. During retrieval of the sync marks, first a position of at least one sync mark that is assigned to the first and highest level in hierarchy, a first level sync mark, is determined. Based on the position the first level sync mark and the known spatial alignment of the sync marks relative to each other, the positions of the sync marks of lower levels are estimated. This has the advantage that it is no longer necessary to calculate a cross correlation function with the whole data page due to fact further information is available. In principle, the method according to the invention may be applied to an arbitrary number of hierarchically ordered levels, therefore providing a flexible and fast method for retrieving sync marks from the detected image of a holographic data page.

Advantageously, the data page comprises a plurality of sync marks assigned to different hierarchically ordered levels, wherein a quantity of sync marks decreases with increasing level of hierarchy. During retrieval of sync marks, first the position of the at least one first level sync mark is determined. As very few, e.g. only one single first level sync mark is comprised in the detected image, the position of said sync mark will be determined very fast. Based on this information, a plurality of positions for sync marks of lower levels are estimated. Consequently, although the number of lower level sync marks is significantly higher, the determination of their positions is accelerated because information about the position of higher level sync marks is used. In summary, the retrieval process is accelerated. Favorably, the method further comprises the step of decoding data from the data page in a data area, a position of said data area being based on the position of at least one sync mark assigned to a lowest level in hierarchy. Accordingly, a lowest level of hierarchy, e.g. a third level of hierarchy is introduced, the sync marks assigned to that lowest or basic level, basic level sync marks, are used for determination of the position of an area in that data is to be decoded. Preferably, at least one position of a second area, in which a second level sync mark is expected to be located, is determined further based on a magnification, calculated for previously detected images of data pages. Advantageously, the method further comprises the step of determining a position of at least one basic synchronization mark assigned to a lowest level in hierarchy, wherein the determination is restricted to a basic area and wherein the position of the basic area is determined further based on a magnification and or a distortion calculated for detected images of previous data pages. The sum of all basic areas is significantly below the detector image size.

Favorably, at least one sync mark is localized by calculating a correlation function between a detected image of the holographic data page and a predefined pattern use for the sync marks. Preferably, the pattern used for the sync mark comprises information about their level in hierarchy. Advantageously, the calculation of the correlation function is restricted to a specific area of the detected image, in which the sync mark is expected to be located. By restricting the calculation of the correlation function to said specific area, in the following also referred to as a detector search area, the determination of the position of the sync marks is accelerated. Preferably, a further acceleration of sync mark detection is achieved by basing the determination of that specific area on an average position of previously detected sync marks.

Advantageously, at least one further position of a sync mark is calculated by extrapolation based on positions determined for sync marks of previous data pages. Preferably, the extrapolated position of said sync mark is located in an edge region of the illumination area of the reconstructed object beam. Usually, data blocks are surrounded by four basic level sync marks, in order to achieve a reliable decoding of data blocks. Due to this requirement, the edge regions of the illumination area of the reconstructed object beam are usually not used for storing data, because no sync marks are available at the edge of the data block averted from the center of the illumination area of the reconstructed object beam. By extrapolation of basic sync marks the edge regions of the illumination area of the reconstructed object beam is usable for storing data blocks.

Further, an apparatus for writing to and/or reading from a holographic storage medium is provided, which comprises a control unit for executing a previously described method. Same or similar advantages mentioned for the method according to the invention apply in a same or similar way to the apparatus according to the invention.

Further, a holographic storage medium is provided, said medium having at least one data page with synchronization marks, wherein at least a first synchronization mark is assigned to first level and a number of second synchronization marks is assigned to a second level that is lower in hierarchy compared to the first level.

Advantageously, the quantity of sync marks decreases with increasing hierarchy. Preferably, the position of the second level sync marks is correlated with a position of the at least one first sync mark. Preferably, different coding schemes are used for the first level sync marks and the second level sync marks. By using different coding schemes for different levels in hierarchy, the levels of the respective sync marks are identified.

Brief description of the figures

Fig. 1 shows a schematic sketch of the structure of a detected image comprising sync marks of different levels.

Fig. 2 shows a further schematic sketch of a detected image comprising sync marks and detector search areas.

Fig. 3 shows a zoomed part of a detected image comprising sync marks and data blocks.

Fig. 4 shows a schematic sketch of a decodable area with and without extrapolation of sync marks.

Fig. 5 schematically shows an apparatus for reading and/or recording a holographic storage medium.

Detailed description of the preferred embodiments

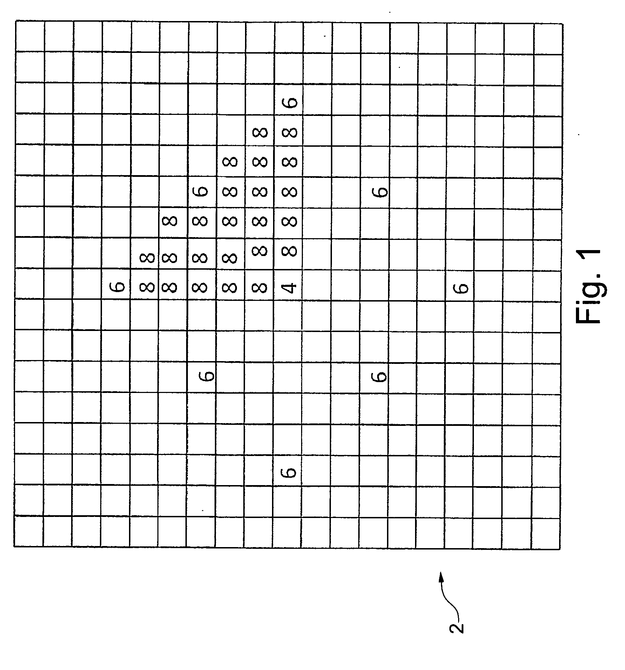

In the following, the invention shall be explained in more detail with reference to figures. Similar or corresponding details in the figures are marked with the same reference numerals. It is understood that the invention is not limited to the exemplary embodiments; specific features can be combined and modified without departing from the invention. The schematic sketch of a detected image 2 is shown in Fig. 1. The position of different sync marks 4, 6, 8, spread over the detected image 2, is depicted in a schematic grid. Sync marks 4, 6, 8 are exemplarily depicted only for some data blocks for the sake of clarity. The detected image comprises a single first level sync mark 4 and eight second level sync marks 6 and a plurality of basic level sync marks 8.

During demodulation of data, first the exact positions of the sync marks 4, 6, 8 are determined. Accordingly, in a first step, the position of the first level sync mark 4 is determined by calculating a cross correlation function between the entire detected image 2 and the pattern used for the first level sync mark 4. The position of said sync mark 4 may be used to detect an image shift. Based on the position of the first level sync mark 4 and the known spatial alignment of sync marks 4, 6, 8 relative to each other, the positions of the second level sync marks 6 are estimated. This is preferably achieved by calculating a cross correlation function between the pattern used for the second level sync marks 6 and a specific detector search area of the detected image 2, i.e. the calculation of the cross correlation function is restricted to the detector search area in order to reduce the numerical effort.

In principle the numerical is effort is given by the following equation:

$$E \propto r^4 \cdot N^2 \cdot S^2 = A_{\det} \cdot A_{sync'} \, ,$$

wherein "r" means a linear scaling factor between the SLM and the detector, which is usually between 1 and 2, "N" is the number of pixels of the SLM, and "S" is the size of a sync mark 4, 6, 8 on the SLM. Exemplarily, both the SLM and the sync mark 4, 6, 8 are assumed to be a square. Further, "$A_{\det}$" is the size of the detector in pixels and "$A_{sync}$" corresponds to the respective size of a sync mark 4, 6, 8 on the detector. Therefore, "$A_{sync}$" corresponds to "$R^2 \cdot S^2$". By replacing the area of the detector "$A_{\det}$" with an effective detector search area "$A_{eff}$", the numerical effort may be reduced significantly, in case "$A_{eff}$" is smaller compared to "$A_{\det}$".

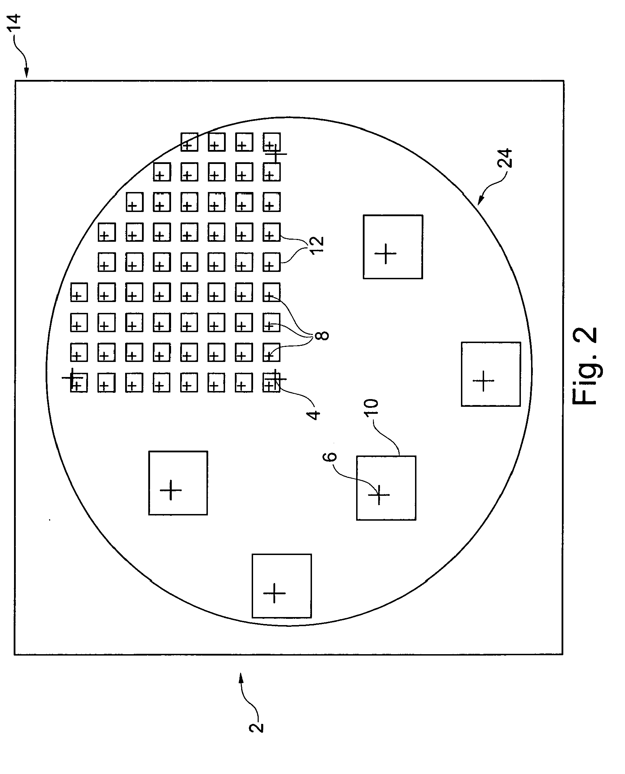

Fig. 2 shows a further schematic topologic map of a detected image 2. The circular shape of the image of the reconstructed object beam 24 is depicted on the rectangular area of the detector 14. Second detector search areas 10 and basic detector search areas 12 are defined on the detected image 2 for the second level sync marks 6 and the basic level sync marks 8. The position of the respective sync marks 4, 6, 8 is indicated by "plus"-signs.

During demodulation, the second level sync marks 6 (also referred to as sub master syncs) are searched in their corresponding detector search areas 10. The position of said detector search areas 10 is estimated based on the position of the first level sync mark 4 and the known spatial alignment of the respective sync marks 4, 6 relative to each other. The estimation of the position of the detector search areas 12 may be further based on the position of the respective search area 12 in previously detected images 2. Particularly, a floating average provides a further basis for said estimation.

Afterwards, a grid of detector search areas 12 providing a basis for the search of the basic level sync marks 8 laid over the entire detector image 2. The grid is aligned based on information about the position of the second level sync marks 6 and the relative position between the second level sync marks 6 and the basic sync marks 8. Again, for the sake of clarity, basic sync marks 8 and their associated detector search areas 12 are depicted in a part of the detected image 2 only.

By way of an example, an image rotation, shift or distortion detected and determined based on information of the position of the higher level sync marks 4, 6 may be taken into account when positioning the grid of basic level sync marks 8. This information provides a basis for stretching, rotating or otherwise adopting the grid.

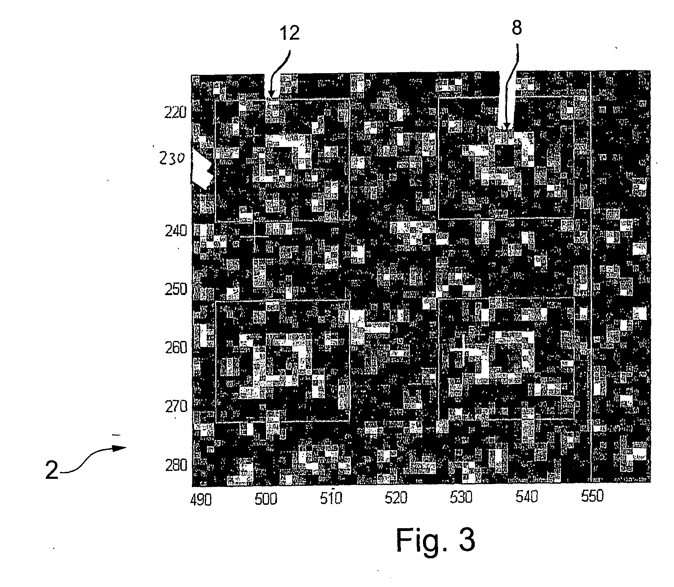

Fig. 3 shows a zoomed part a detected image 2, further including an example of a light / dark pattern representing data blocks, basic level sync marks 8, indicated by a double "L" pattern and corresponding detector search areas 12. Each basic level sync mark 8 is located in a detector search area 12, respectively. A group of data blocks is surrounded by the four basic level sync marks 8, in order to achieve an appropriate correction of image distortion.

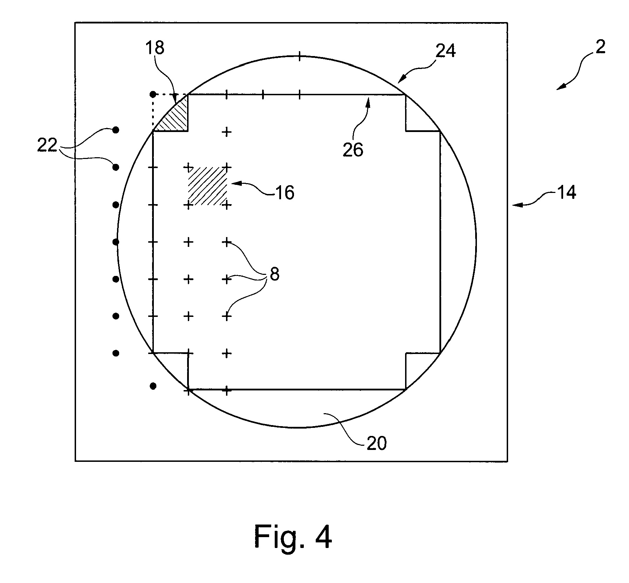

Due to the requirement, an accurate correction of image distortion e.g. caused by misalignment of the optical system, can only be effected in case a data block is surrounded by four basic level sync marks 8, the area of the decodable area 26 usable for data storage is limited. The above mentioned condition is not fulfilled for edge regions of the decodable area 26, as will be explained by means of Fig. 4.

Fig. 4 shows a schematic sketch of a detected image 2. Again the image of the reconstructed object beam 24 is depicted by a circle. The reconstructed object beam 24 lies in the rectangular area of the detector 14. A decodable area 26 is arranged inside said circular image of the reconstructed object beam 24. For better clarity, only in the left part of the detected image several basic level sync marks 8 are depicted. Sync marks 4, 6 of higher levels have been omitted for the sake of clarity.

In the decodable area 26, each group of detected data blocks 16 is surrounded by four basic sync marks 8, exemplarily shown for a single group of data blocks 16. Outside the illumination area of the reconstructed object beam 24 no basic sync marks 8 are present. A group of data blocks 18 close to the border of the illumination area of the reconstructed object beam is not decodable, because it is not surrounded by four basic sync marks 8. Because basic sync marks 8 are placed at a relative large distance to each other, compared to the size of a data pixel, and in general a group of data blocks, which is located between four neighboring basic sync marks 8, consists of multiple data blocks, a considerable number of data blocks of the reconstructed object beam 24 are not within the decodable area 26. Therefore, a part of the storage capacity at the outer region is wasted. As a result, the typically circular shape of the reconstructed object beam is utilized not completely. The outer regions 20 are lost for data storage, in case a group of data blocks 16 must be surrounded by four a basic sync marks 8.

The decodable area 26 may be significantly enlarged by extrapolation of the basic sync marks 8 to a region outside the illumination area of the reconstructed object beam 24 of the detected image 2 and even to areas outside the detected image 2. Exemplarily, some extrapolated basic sync marks 22 are shown at the edge region of the illumination area of the reconstructed object beam 24. Accordingly, the additional edge area 20 of the reconstructed object beam 24 may be used for storing additional data blocks 18. Said additional data blocks 18 being at least partly surrounded by extrapolated basic sync marks 22. The extrapolation of sync marks 22 leads to an increased data storage capacity per page by a factor of about 1.2. Best experience has been made in case a quadratic extrapolation function has been used.

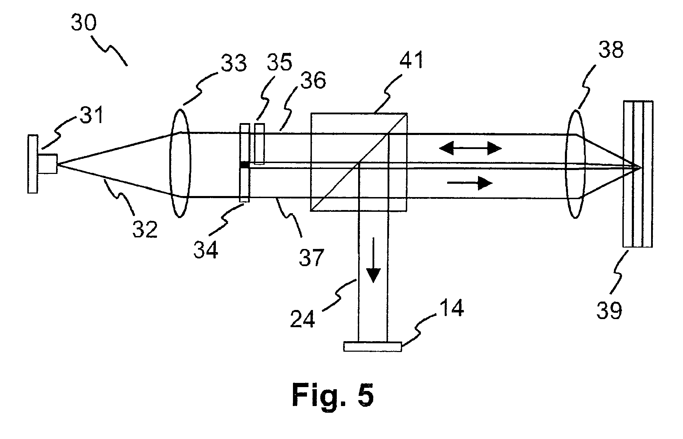

In Fig. 5 an apparatus 30 for reading and/or recording a holographic storage medium 39 is shown schematically. A source of coherent light, e.g. a laser diode 31, emits a light beam 32, which is collimated by a collimating lens 33. The light beam 32 is then divided into two separate light beams 36, 37. In the example the division of the light beam 32 is achieved using a first beam splitter 34. However, it is likewise possible to use other optical components for this purpose. A spatial light modulator (SLM) 35 modulates one of the two beams, the so called "object beam" 36, to imprint a two-dimensional data pattern. Both the object beam 36 and the further beam, the so called "reference beam" 37, are focused into a holographic storage medium 39, e.g. a holographic disk or card, by an objective lens 38. At the intersection of the object beam 36 and the reference beam 37 an interference pattern appears, which is recorded in a photo-sensitive layer of the holographic storage medium 39.

The stored data are retrieved from the holographic storage medium 39 by illuminating a recorded hologram with the reference beam 37 only. The reference beam 37 is diffracted by the hologram structure and produces a copy of the original object beam 36, the reconstructed object beam 24. This reconstructed object beam 24 is collimated by the objective lens 38 and directed onto a two-dimensional array detector 14, e.g. a CCD-array, by a second beam splitter 41. The array detector 14 allows to reconstruct the recorded data.

**Claims**

1.  Method for retrieving synchronization marks (4, 6, 8) from a holographic data page, comprising the steps of:

    - Determining a position of at least a first synchronization mark (4) that is assigned to a first level,
    - Determining a position of one or more synchronization marks (6, 8) assigned to a second level that is lower in hierarchy compared to the first level, wherein the determination is based on the position of the at least one first synchronization mark (4) and a known spatial alignment of the synchronization marks (4, 6, 8) relative to each other.

2.  Method according to claim 1, wherein the data page comprises a plurality of synchronization marks (4, 6, 8) assigned to different hierarchically ordered levels, and wherein a quantity of synchronization marks (4, 6, 8) decreases with increasing level of hierarchy

3.  Method according to claim 1 or 2, further comprising the step of:

    - Decoding data from the data page in a data area, a position of said data area being based on the position of an at least one synchronization mark (8) assigned to a lowest level in hierarchy.

4.  Method according to one of claims 1 to 3, wherein at least one synchronization mark (4, 6, 8) is localized by calculating a correlation function between a detected image (2) of the holographic data page and a predefined pattern used for the synchronization mark (4, 6, 8).

5. Method according to claim 4, wherein the calculation of the correlation function is restricted to a specific area (10, 12) of the detected image (2), in which said synchronization mark (4, 6, 8) is expected to be located.

6. Method according to claim 5, wherein a determination of a position of said specific area (10, 12) is further based on an average position of previously detected synchronization marks (4, 6, 8).

7. Method according to one of claims 1 to 6, wherein at least a position of a second area (10), in which a synchronization mark (6) of the second level is expected to be located, is determined further based on a magnification calculated for previously detected images (2) of data pages.

8. Method according to one of claims 1 to 6, further comprising the step of:

   Determining a position of at least one basic synchronization mark (8) assigned to a lowest level in hierarchy, wherein the determination is restricted to a basic area (12) and wherein the position of the basic area (12) is determined based on a magnification and/or distortion calculated for detected images (2) of previous data pages.

9. Method according to one of claims 1 to 8, wherein at least one further position of a synchronization mark (22) is calculated by extrapolation based on a plurality of determined positions of synchronization marks (4, 6, 8).

10. Method according to claim 9, wherein the extrapolated position of the synchronization mark (22) is located in an edge region (20) of the data page (2).

11. Apparatus for writing to and/or reading from a holographic storage medium comprising a control unit for executing the method according to one of the preceding claims.

12. Holographic storage medium having at least one data page with synchronization marks (4, 6, 8), wherein at least a first synchronization mark (4) is assigned to a first level and a number of second synchronization marks (6, 8) is assigned to a second level that is lower in hierarchy compared to the first level.

13. Holographic storage medium according to claim 12, wherein a quantity of synchronization marks (4, 6, 8) decreases with increasing hierarchy.

14. Holographic storage medium according to claim 12 or 13, wherein the position of the second synchronization marks (6) is correlated with the position of the at least one first synchronization mark (4).

15. Holographic storage medium according to one of claims 12 to 14, wherein different coding schemes are used for the first synchronization marks (4) and the second synchronization marks (6).

2

Fig. 1

Fig. 2

EP 2 273 496 A1

Fig. 3

EP 2 273 496 A1

Fig. 4

EP 2 273 496 A1

**Fig. 5**

Europäisches
Patentamt

European
Patent Office

Office européen
des brevets

# EUROPEAN SEARCH REPORT

Application Number

EP 09 30 5591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/297865 A1 (HARA MASAAKI [JP] ET AL) 4 December 2008 (2008-12-04) * paragraphs [0017] - [0033], [0116] - [0158]; figures 23-25 * | 1-8, 11-15 | INV. G11B7/0065 G11B7/007 |
| X | US 5 920 536 A (CAMPBELL SCOTT PATRICK [US] ET AL) 6 July 1999 (1999-07-06) * column 8 - column 13; figures 3-5 * | 1-8, 11-15 | |
| X | US 7 116 626 B1 (WOODS DANIEL D [US] ET AL) 3 October 2006 (2006-10-03) * column 14 - column 17; figures 3-7 * | 1-8, 11-15 | |
| X | US 2006/039051 A1 (BABA SHIGEYUKI [JP] ET AL) 23 February 2006 (2006-02-23) * paragraph [0036] - paragraph [0043]; figures 6,7 * | 1-8, 11-15 | |
| X | US 2007/047041 A1 (NOGUCHI TATSUMI [JP]) 1 March 2007 (2007-03-01) * paragraph [0234] - paragraph [0283]; figures 14-27 * | 1-8, 11-15 | TECHNICAL FIELDS SEARCHED (IPC) G11B |
| X | US 2006/203689 A1 (KANAOKA TOSHIKAZU [JP] ET AL) 14 September 2006 (2006-09-14) * figures 2-5 * | 12-15 | |

The present search report has been drawn up for all claims

| Place of search | Date of completion of the search | Examiner |
|---|---|---|
| Munich | 16 November 2009 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 09 30 5591

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2009

| Patent document cited in search report | | Publication date | Patent family member(s) | | Publication date |
|---|---|---|---|---|---|
| US 2008297865 | A1 | 04-12-2008 | CN | 101165786 A | 23-04-2008 |
| | | | JP | 4232812 B2 | 04-03-2009 |
| | | | JP | 2008103005 A | 01-05-2008 |
| | | | KR | 20080035465 A | 23-04-2008 |
| US 5920536 | A | 06-07-1999 | DE | 69737407 T2 | 15-11-2007 |
| | | | EP | 0817201 A2 | 07-01-1998 |
| | | | JP | 3220054 B2 | 22-10-2001 |
| | | | JP | 10097792 A | 14-04-1998 |
| | | | US | 5838650 A | 17-11-1998 |
| US 7116626 | B1 | 03-10-2006 | NONE | | |
| US 2006039051 | A1 | 23-02-2006 | JP | 2006065272 A | 09-03-2006 |
| | | | KR | 20060048850 A | 18-05-2006 |
| US 2007047041 | A1 | 01-03-2007 | JP | 2007065139 A | 15-03-2007 |
| US 2006203689 | A1 | 14-09-2006 | CN | 1835092 A | 20-09-2006 |
| | | | JP | 2006251675 A | 21-09-2006 |

EPO FORM P0459

For more details about this annex : see Official Journal of the European Patent Office, No. 12/82

**EP 2 273 496 A1**

**REFERENCES CITED IN THE DESCRIPTION**

**Patent documents cited in the description**

- US 7116626 B